# FASCICULE DE BREVET EUROPEEN

(11) **EP 1 866 694 B1**
(45) Date de publication et mention de la délivrance du brevet: **11.04.2012**
(21) Numéro de dépôt: 06726051.3
(22) Date de dépôt: 09.03.2006
(51) Int. Cl.: G02C 13/00

(54) **METHODE DE CENTRAGE D'UNE LENTILLE OPHTALMIQUE SUR UNE MONTURE SANS CERCLES**
VERFAHREN ZUM ZENTRIEREN EINER BRILLENLINSE AN EINEM RANDLOSEN RAHMEN
METHOD FOR CENTRING AN OPHTHALMIC LENS ON A RIMLESS FRAME

(30) Priorité: 04.04.2005 FR 0503326
(43) Date de publication de la demande: 19.12.2007
(73) Titulaire: ESSILOR INTERNATIONAL (Compagnie Générale d'Optique), 94227 Charenton (FR)
(72) Inventeur: MOINARD, Bruno, Essilor International, F-94227 Charenton (FR)
(74) Mandataire: Chauvin, Vincent
(86) Numéro de dépôt international: PCT/FR2006/000520
(87) Numéro de publication internationale: WO 2006/106196

(56) Documents cités:
- FR-A- 2 620 927
- FR-A- 2 719 463
- FR-A- 2 807 169
- US-A- 4 693 573
- JALIE M O: "OPHTHALMIC LENSES AND DISPENSING PART ONE - LENS CENTRATION" OPTICIAN, IPC CONSUMER INDUSTRIES PRESS, SUTTON, GB, vol. 210, no. 5524, octobre 1995 (1995-10), pages 18-25, XP000922883 ISSN: 0030-3968

## Description

### DOMAINE TECHNIQUE AUQUEL SE RAPPORTE L'INVENTION

La présente invention concerne de manière générale le domaine de la lunetterie et plus précisément le montage de lentilles ophtalmiques d'une paire de lunettes correctrices sur une monture de type sans cercles. Elle vise plus particulièrement un procédé de centrage d'une telle lentille.

Ledit procédé trouve une application particulièrement avantageuse par son implémentation dans un logiciel intégré à une machine du type de celles commercialisées par Essilor International sous la marque Kappa ou sous la marque Kappa CT.

### ARRIERE-PLAN TECHNOLOGIQUE

La partie technique du métier de l'opticien consiste à monter une paire de lentilles ophtalmiques sur la monture sélectionnée par le porteur. Ce montage se décompose en deux opérations principales :
- le centrage de chaque lentille qui consiste à positionner convenablement la lentille en regard de l'oeil du futur porteur et, partant, par rapport à la monture, puis
- le détourage de chaque lentille qui consiste à usiner ou découper son contour à la forme souhaitée, compte tenu des paramètres de centrage définis.

Dans le cadre de la présente invention, on s'intéresse à la première opération dite de centrage, spécifiquement dans l'hypothèse où la monture est du type sans cercles. Il s'agit, concrètement, pour l'opticien, de définir la position que devra occuper le référentiel optique (typiquement, les marques usuelles ou le centre optique) d'une lentille ophtalmique de lunettes sur une monture présentant une géométrie connue, pour que la lentille soit convenablement positionnée en regard de l'oeil correspondant du porteur pour exercer au mieux la fonction optique pour laquelle elle a été conçue.

Pour cela, dans un premier temps, l'opticien situe la position de la pupille de chaque oeil sur la lentille correspondante. Il détermine ainsi, principalement, deux paramètres liés à la morphologie du porteur, à savoir l'écart inter-pupillaire ou les deux demi-écarts définis comme les distances entre les pupilles des deux yeux et le nez du porteur, ainsi que les hauteurs des pupilles par rapport à la monture installée sur le visage du porteur. Lorsque la monture est du type cerclée, la hauteur est par exemple la hauteur dite « sous-pupille » ou encore « datum », définie comme étant la distance entre la pupille de l'oeil considéré et le point de la monture situé à la verticale de la pupille de l'oeil, sous cette même pupille. De façon analogue, lorsque la monture est du type sans cercle, la hauteur sous-pupille est définie comme étant la distance entre la pupille de l'oeil considéré et le point du contour de la lentille situé à la verticale de la pupille de l'oeil, sous cette même pupille. En pratique, l'opticien mesure la hauteur ainsi définie sur une paire de lunettes de présentation formant gabarit et constituée d'une monture et de lentilles de formes identiques à celles que l'on souhaite réaliser.

Puis, dans un second temps, l'opticien reporte la hauteur ainsi mesurée sur la lentille à détourer, à partir de la position du point de centrage de cette lentille qu'il a préalablement repéré et qui doit être calé sur la pupille du porteur. Cette hauteur reportée, combinée au demi-écart pupillaire correspondant, permet alors de centrer la lentille, c'est-à-dire de la positionner convenablement sur la monture et, partant, de positionner le contour de détourage souhaité sur la lentille.
On connaît aussi du document FR 2 807 169 une méthode de centrage comportant :
- une étape de mesure de l'écart inter-pupillaire du porteur,
- une étape de mesure de la hauteur totale du cercle de la monture de lunettes de présentation sélectionnée par le porteur,
- une étape de déduction de la hauteur « datum » en fonction de la hauteur totale du cercle, à partir d'une analyse statistique d'un grand nombre de montures de lunettes et de porteurs, et
- une étape de report de l'écart inter-pupillaire et de la hauteur « datum » sur la lentille, à partir de la position du point de centrage de cette lentille.
On connaît également une méthode de centrage utilisable pour les montures cerclées comme pour les montures sans cercles, consistante à :
i) équiper le porteur avec des lunettes de présentation comportant une monture de présentation identique à ladite monture cible et au moins une lentille de présentation associée au même oeil que ladite lentille cible et présentant un contour de forme et de position par rapport à la monture identiques à la forme et à la position prévue pour le contour final de la lentille cible après détourage,
ii) pointer manuellement ou identifier automatiquement sur la lentille de présentation le point pupillaire en regard duquel se situe la pupille de l'oeil correspondant du porteur,
iii) mesurer la hauteur pupillaire du point pupillaire de la lentille de présentation,
iv) mesurer l'écart ou le demi-écart pupillaire du porteur,
v) repérer, par déflectométrie, interférométrie ou reconnaissance d'images, le référentiel optique de la lentille cible et en particulier le point de centrage de la lentille cible qui est destiné à venir en regard de la pupille du porteur lorsque le porteur porte ses lunettes cibles,
vi) reporter la hauteur pupillaire et l'écart ou le demi-écart pupillaire sur la lentille cible, à partir dudit point de centrage de la lentille cible, et
vii) en déduire la position de centrage de la lentille cible par rapport à la monture cible.

En pratique, à l'étape iii, on mesure l'écart de hauteur entre le point pupillaire de la lentille de présentation et un point de référence de présentation lié à la lentille de présentation. Le point de référence de présentation lié à la lentille de présentation est par exemple le point le plus bas de la monture de présentation.

On reporte alors, à l'étape vi, cet écart de hauteur sur la lentille cible, à partir de son point de centrage. Puis, on en déduit, à l'étape vii, la position de centrage de la lentille cible par rapport à la monture cible, ou inversement, pour qu'un point remarquable cible de la lentille cible, homologue du point remarquable de la lentille de présentation, présente le même écart de hauteur par rapport au point de centrage que l'écart du point remarquable de la lentille de présentation par rapport au point pupillaire.

On comprend donc qu'avec ces deux méthodes, il est nécessaire que la lentille de présentation présente un contour de forme identique à la forme prévue pour le contour final de la lentille cible après détourage.

On constate cependant que les habitudes des consommateurs évoluent de plus en plus vers un traitement davantage personnalisé. On souhaite alors dans le cas des montures sans cercle, pour des raisons de mode ou de confort visuel, disposer d'une grande liberté dans la forme du contour de la lentille. Or, la méthode actuelle de prise de mesure des hauteurs de pupille, par référence au bord inférieur d'un gabarit, impose de disposer d'un gabarit de forme identique à celle que l'on souhaite finalement obtenir pour la lentille. Autrement dit, il est nécessaire de disposer d'autant de gabarits que de variations de forme de lentille, ce qui est particulièrement malcommode et peu souple, ainsi que restrictif de la liberté de choix de forme de lentilles des porteurs.

### OBJET DE L'INVENTION

Un but de la présente invention est de proposer une méthode de centrage d'une lentille ophtalmique cible de lunettes ayant un contour souhaité de forme quelconque sur une monture du type sans cercles, à partir d'une prise de mesure de la hauteur pupillaire correspondante sur une lentille gabarit ayant un contour de forme différente de celle du contour de la lentille cible.

A cet effet, on propose selon l'invention une méthode de centrage d'une lentille ophtalmique cible de lunettes cibles sur une monture cible de type sans cercles présentant une géométrie connue, avec un pontet et des branches fixés à la lentille cible en des points d'ancrages, comportant les étapes de :
a) équiper le porteur avec des lunettes de présentation comportant une monture de présentation identique à ladite monture cible et au moins une lentille de présentation associée au même oeil que ladite lentille cible,
b) pointer manuellement ou identifier automatiquement sur la lentille de présentation le point pupillaire en regard duquel se situe la pupille de l'oeil correspondant du porteur,
c) mesurer la hauteur pupillaire du point pupillaire de la lentille de présentation,
d) mesurer l'écart ou le demi-écart pupillaire du porteur,
e) repérer, par déflectométrie, interférométrie ou reconnaissance d'images, le référentiel optique de la lentille cible et en particulier le point de centrage de la lentille cible qui est destiné à venir en regard de la pupille du porteur lorsque le porteur porte ses lunettes cibles,
f) reporter la hauteur pupillaire et l'écart ou le demi-écart pupillaire sur la lentille cible, à partir dudit point de centrage de la lentille cible, et
g) en déduire la position de centrage de la lentille cible par rapport à la monture cible, ou inversement,
   méthode dans laquelle il est prévu que, la lentille de présentation présentant un contour de forme et/ou de position par rapport à la monture de présentation différentes de la forme et/ou de la position prévues pour le contour final de la lentille cible après détourage et montage sur la monture cible,
   - on mesure directement ou indirectement, à l'étape c, la hauteur du point pupillaire de la lentille de présentation dans un référentiel lié à la monture de présentation et indépendant de la forme du contour de la lentille de présentation et
   - on déduit, à l'étape g, la position de centrage de la lentille cible par rapport à la monture cible, ou inversement, pour que le point de centrage soit, dans un référentiel lié à la monture cible homologue du référentiel de la monture de présentation, situé à la même hauteur que le point pupillaire dans le référentiel de la monture de présentation.

Ainsi, le référentiel à l'aide duquel on positionne les lentilles cibles en face des pupilles du porteur est lié aux montures. Or, les montures sont identiques sur les lunettes cibles et sur les lunettes de présentation. L'opticien dispose donc d'un référentiel commun aux deux types de lunettes. Il n'est alors plus nécessaire que les lentilles cibles et les lentilles de présentation présentent le même contour. L'opticien n'a donc plus la contrainte de posséder, pour chaque type de contour de lentille proposé, un modèle de présentation coûteux et encombrant.

Selon une première caractéristique avantageuse de l'invention, on mesure directement ou indirectement, à l'étape c, l'écart de hauteur entre le point pupillaire de la lentille de présentation et un point remarquable de présentation lié à la monture de présentation et matériellement identifiable sur cette monture. En outre, on déduit, à l'étape g, la position de centrage de la lentille cible par rapport à la monture cible, ou inversement, pour qu'un point remarquable cible lié à la monture cible, homologue du point remarquable de présentation de la monture de présentation, présente le même écart de hauteur par rapport au point de centrage que l'écart de hauteur du point remarquable de présentation par rapport au point pupillaire.

Ainsi, le point remarquable de présentation de la monture de présentation est un point observable visuellement et donc aisément repérable. L'opticien peut donc, sans disposer de la géométrie des lentilles de présentation, c'est-à-dire de la forme, des dimensions et de la position des lentilles de présentation, reporter sur la lentille cible l'écart de hauteur mesuré sur la lentille de présentation entre le point pupillaire et le point remarquable de présentation. Ce report permet, d'une part, d'éviter à l'opticien de devoir acquérir la géométrie du contour des lentilles de présentation et, d'autre part, d'utiliser n'importe quelle lunettes de présentation disponible en magasin comportant la monture désirée par le client pour réaliser ces mesures.

Le point remarquable de présentation est, par exemple, un point d'ancrage du pontet de la monture de présentation sur la lentille de présentation concernée ou un point d'ancrage des branches de la monture de présentation sur la lentille de présentation concernée.

Selon un premier mode opératoire de l'invention, on mesure directement, à l'étape c, l'écart de hauteur entre le point pupillaire de la lentille de présentation et le point remarquable de présentation de la monture de présentation.

Ainsi, la mesure dudit écart pupillaire est réalisée aisément et rapidement, sans nécessiter aucun calcul de la part de l'opticien.

Selon un deuxième mode opératoire de l'invention,
- on acquiert numériquement la forme du contour de la lentille de présentation ainsi que la position de ce contour par rapport à la monture de présentation, par lecture de contour et/ou palpage et/ou reconnaissance d'images ou à partir d'un fichier électronique représentatif de sa forme et de sa position par rapport à la monture de présentation,
- on mesure, à l'étape c, l'écart de hauteur entre le point pupillaire de la lentille de présentation et un point de référence de présentation appartenant au contour de la lentille de présentation,
- on en déduit par calcul, compte tenu de la forme connue du contour de la lentille de présentation et du positionnement connu de ce contour par rapport à la monture de présentation, la hauteur de ce point de référence de présentation dans le référentiel lié à la monture de présentation, et
- on en déduit la hauteur du point pupillaire de la lentille de présentation dans le référentiel de la monture de présentation.

Ainsi, les opticiens conservent l'habitude qu'ils ont de réaliser la mesure de la hauteur du point pupillaire par rapport à un point de référence du contour de la lentille de présentation.

De plus, lorsque la mesure de l'écart de hauteur entre le point pupillaire de la lentille de présentation et le point remarquable de présentation est réalisée directement, cette mesure est faite sur une petite distance. Or, l'imprécision des mesures sur de petites longueurs est grande, c'est la raison pour laquelle on souhaite accroître la longueur des écarts de hauteur mesurés.

Ainsi, utiliser un point de référence sur le contour de la lentille de présentation permet d'accroître la longueur des écarts à mesurer. L'écart de hauteur calculé entre le point pupillaire de la lentille de présentation et le point remarquable de présentation est alors rendu plus précis.

Avantageusement alors, à l'étape c, on calcule, compte tenu de la forme connue du contour de la lentille de présentation, l'écart de hauteur entre le point de référence de présentation et ledit point remarquable de présentation et on en déduit l'écart de hauteur entre le point pupillaire de la lentille de présentation et ledit point remarquable de présentation.

Ainsi, dans un souci de précision et de simplicité, l'opticien ne réalise qu'une unique mesure afin de déterminer la hauteur du point pupillaire. Cette mesure présente une longueur importante, ce qui augmente sa précision. La mesure est ensuite comparée à l'écart de hauteur entre le point de référence et le point remarquable de la lentille de présentation. Cet écart de hauteur est précisément connu dans la mesure où la forme de la lentille de présentation est connue de l'opticien. La déduction de la hauteur du point pupillaire est alors réalisée à l'aide d'une unique mesure présentant une précision importante.

Avantageusement encore, le point de référence de présentation lié à la lentille de présentation est le point le plus bas du contour de la lentille de présentation ou le point du contour de la lentille de présentation situé à la verticale du point pupillaire, sous le point pupillaire.

Avantageusement, le contour de la lentille cible est choisi dans une base de données correspondant à la monture cible choisie ou par une technique de déformation de contour. Ainsi, avec une base de données, le futur porteur peut choisir les montures puis le contour des lentilles cibles selon un vaste éventail de modèles. Avec la technique de déformation de contour, le futur porteur a la possibilité d'adapter le contour des lentilles cibles selon ses goûts précis.

### DESCRIPTION DETAILLEE D'UN EXEMPLE DE REALISATION

La description qui va suivre en regard des dessins annexés donnés à titre d'exemples non limitatifs, fera bien comprendre en quoi consiste l'invention et comment elle peut être réalisée.

Dans les dessins annexés :
- la figure 1 est une vue schématique des lunettes de présentation, des lunettes cibles et des points et distances caractéristiques de la méthode de centrage selon l'invention ;
- la figure 2 est une vue schématique des lunettes de la figure 1 représentant les points et distances caractéristiques d'une première variante de méthode de centrage ;
- la figure 3 est une vue schématique des lunettes de la figure 1 représentant les points et distances caractéristiques d'une deuxième variante de méthode de centrage ;
- la figure 4 est une vue schématique des lunettes de la figure 1 représentant les points et distances caractéristiques d'une troisième variante de méthode de centrage ; et
- la figure 5 est une vue schématique des lunettes de la figure 1 représentant les points et distances caractéristiques d'une quatrième variante de méthode de centrage.

Pour la mise en oeuvre de la méthode selon l'invention, il faut disposer de moyens bien connus en eux-mêmes de l'homme du métier. Ces moyens ne font pas en propre l'objet de l'invention décrite.

Ainsi, parmi lesdits moyens bien connus, il est possible d'utiliser un appareil de lecture de contours tel que décrit dans le brevet EP0750172 ou commercialisé par Essilor International sous la marque Kappa ou sous la marque Kappa CT. Il est en outre aussi possible d'utiliser un appareil de centrage tel que décrit dans le brevet FR2825466 ou commercialisé par Essilor International sous la marque Kappa ou sous la marque Kappa CT.

La mise en oeuvre de la méthode trouve une application particulièrement avantageuse par son implémentation dans un logiciel intégré à une machine pourvue d'une unité de traitement d'un programme apte à exécuter ses étapes f et g.

En pratique, l'opticien dispose, d'une part, de lunettes de présentation 30 et, d'autre part, de deux lentilles cibles 11,12 et d'une monture cible 13.

Les lunettes de présentation 30 sont composées de deux lentilles de présentation 31,32 et d'une monture de présentation 33. Les deux lentilles de présentation 31,32 comportent chacune quatre points d'ancrage 37A,37B,38A,38B,39A,39B,40A,40B. Elles sont par ailleurs définies par un contour 41. La monture de présentation 33 comprend quant à elle un pontet 34 et deux branches 35,36. Le pontet est fixé à quatre points d'ancrage 38A,38B,40A,40B. La branche 35 est fixée à deux points d'ancrage 39A,39B. La branche 36 est quant à elle fixée à deux autres points d'ancrage 37A,37B.

L'objectif est de réaliser des mesures sur les lunettes de présentation 30 permettant d'équiper ultérieurement un porteur de lunettes cibles 10. Pour cela, les lentilles cibles 11,12 doivent être convenablement centrées en regard des pupilles 50 du porteur lorsqu'elles sont montées sur la monture cible 13.

Les lunettes cibles 10 comportent d'une part une monture cible 13 et d'autre part deux lentilles cibles 11,12. La monture cible 13 est identique à la monture de présentation 33. En revanche, les lentilles cibles 11,12 présentent un contour 21 différent du contour 41 des lentilles de présentation 31,32. Le contour 21 des lentilles cibles 11,12 est par ailleurs connu. Les deux lentilles cibles 11,12 comportent chacune quatre points d'ancrage 17A,17B,18A,18B,19A,19B,20A,20B sur lesquels se fixe la monture cible 13.

La monture cible 13 étant identique à la monture de présentation 33, il est nécessaire que les points d'ancrage 17A,17B,18A,18B,19A,19B,20A,20B des lentilles cibles 11,12 aient des positions identiques à celles des points d'ancrage 37A,37B,38A,38B,39A,39B,40A,40B des lentilles de présentation 31,32. Ainsi, dans un repère X,Y lié au point d'ancrage 19B, les points d'ancrage 19A,20A,20B ont des coordonnées identiques à celles des points d'ancrage 39A,40A,40B pris dans un repère X',Y' lié au point d'ancrage 39B. En outre, dans un repère X,Y lié au point d'ancrage 18B, les points d'ancrage 18A,17A,17B ont des coordonnées identiques à celles des points d'ancrage 38A,37A,37B pris dans un repère X',Y' lié au point d'ancrage 38B.

Préalablement au centrage, le futur porteur de lunettes cibles 10 choisit parmi les lunettes de présentation 30 que possède l'opticien celles comportant la monture cible 13 désirée.

Le futur porteur choisit ensuite le contour 21 des lentilles cibles 11,12. Ce choix est réalisé soit à partir des lentilles de présentation 31,32 physiquement disponibles, soit dans un registre de base de données, soit par déformation du contour des lentilles de présentation 31,32.

Si le choix est réalisé parmi les lentilles de présentation 31,32 physiquement disponibles, la forme du contour est directement acquise sur les lentilles de présentation 31,32 avec un appareil de lecture de contours du type précité.

La base de données fait quant à elle correspondre à la monture cible 13 choisie divers contours 21 de lentilles cibles 11,12 permettant aux lentilles cibles 11,12 d'être montées sur ladite monture cible 13. Cette base de données peut être informatisée ou bien se présenter sous une forme papier.

La déformation de contour est réalisée à l'aide d'un système de traitement d'images informatique. Le porteur peut ainsi déformer le contour initial qui lui est présenté afin de l'adapter à son goût. Cette déformation se fait de sorte que seul le contour 21 présenté a la possibilité d'être déformé et de sorte que les lentilles cibles 11,12 soient montables sur la monture cible 13. Les points d'ancrage 37A,37B,38A,38B,39A,39B,40A,40B conservent quant à eux leur position par rapport à la monture de présentation 33.

Une fois le choix des montures cibles 13 et du contour 21 réalisé, l'opticien peut commencer à effectuer des mesures.

Selon la méthode de centrage de l'invention, à l'étape a, l'opticien équipe le porteur des lunettes de présentation 30 comportant la monture de présentation 33 choisie. Les lentilles de présentation 31,32 des lunettes de présentation 30 comportent un contour 41 différent du contour 21 des lentilles cibles 11,12. Le contour 41 n'est pas nécessairement de forme connue.

A l'étape b, l'opticien pointe manuellement sur chacune des lentilles de présentation 31,32 le point pupillaire Pu2. Le point pupillaire Pu2 correspond au point sur la lentille de présentation 31,32 qui se situe en regard de la pupille 50 de l'oeil 51 correspondant du porteur.

En variante, l'opticien peut réaliser cette opération de pointage à l'aide d'un logiciel d'acquisition et de reconnaissance d'images réalisant une identification électronique et/ou informatique du point pupillaire Pu2 à partir d'une photo du visage du porteur équipé des lunettes de présentation 30.

L'opticien peut alors ôter au porteur les lunettes de présentation 30 afin de mesurer directement à l'étape c la hauteur h du point pupillaire Pu2 sur chacune des lentilles de présentation 31,32. Ladite hauteur h correspond à l'écart selon l'axe Y' entre le point pupillaire Pu2 et un point remarquable de présentation Pr2. Le point remarquable de présentation Pr2 correspond au point d'ancrage 38B,40B de la lentille de présentation 31,32. Cette mesure est réalisée manuellement par l'opticien sur chacune des lentilles de présentation 31,32 à l'aide, par exemple, d'un réglet. En pratique, pour effectuer un mesure précise, l'opticien peut tracer un trait horizontal sur la lentille de présentation 31,32 passant par le point d'ancrage 38B,40B puis peut mesurer l'écart entre ce trait et le point pupillaire Pu2.

A l'étape d, selon la même méthode ou à l'aide d'un pupillomètre ou encore d'un système d'acquisition et de traitement d'images, l'opticien mesure des demi-écarts pupillaires Ed,Eg du porteur sur chacune des lentilles de présentation 31,32.

Le demi-écart pupillaire Ed correspond classiquement à l'écart entre le milieu du nez du porteur et la pupille 50 de l'oeil 51 droit du porteur. Similairement, le demi-écart pupillaire Eg correspond à l'écart entre le milieu du nez du porteur et la pupille 50 de l'oeil 51 gauche du porteur.

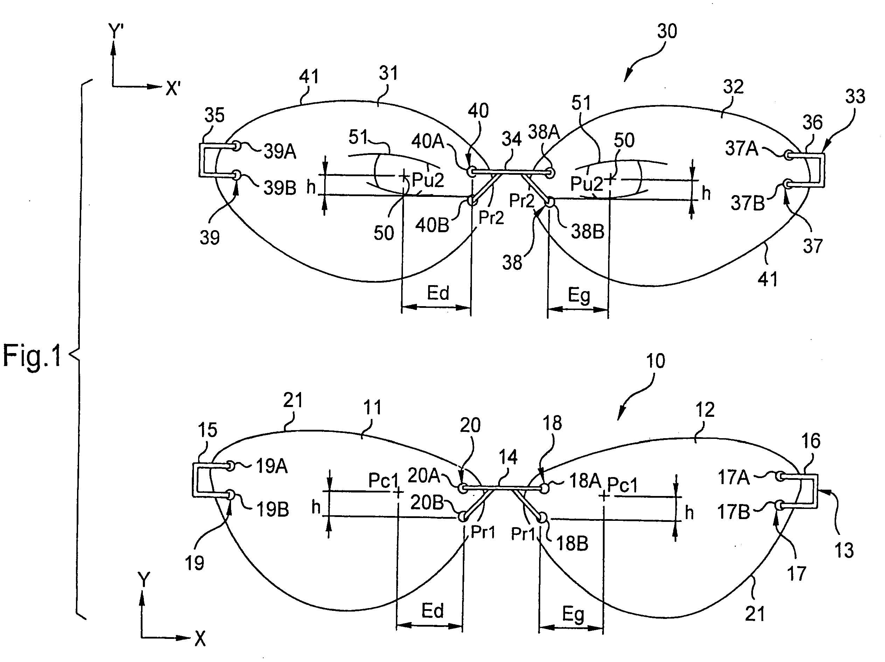

Eventuellement, comme dans l'exemple illustré sur la figure 1, on pourra imaginer que le demi-écart pupillaire Ed correspond à l'écart selon l'axe X' entre le point pupillaire Pu2 de la lentille de présentation droite 31 et le point remarquable de présentation Pr2 de la même lentille. Similairement, on pourra imaginer que le demi-écart pupillaire Eg correspond à l'écart selon l'axe X' entre le point pupillaire Pu2 de la lentille de présentation gauche 32 et le point remarquable de présentation Pr2 de la même lentille.

A la suite de ces mesures, à l'étape e, l'opticien repère le référentiel optique de chaque lentille cible 11,12. Il repère en particulier le point de centrage Pc1 de chaque lentille cible 11,12. Ce repérage est réalisé selon une technique optique dépendant du matériel à la disposition de l'opticien. Cette technique peut être une technique de déflectométrie, d'interférométrie ou de reconnaissance d'image. On peut par exemple utiliser un appareil de centrage tel que décrit dans le brevet FR2825466. Un exemple d'un tel appareil est celui commercialisé par Essilor International sous la marque Kappa ou encore celui commercialisé sous la marque Kappa CT.

Ledit point de centrage Pc1 correspond au point destiné à venir en regard de la pupille 50 de l'oeil 51 du porteur lorsque ce dernier porte les lunettes cibles 10. Le point Pc1 est donc, dans un référentiel lié à la monture cible 13 homologue du référentiel de la monture de présentation 33, situé à la même hauteur pupillaire h que le point pupillaire Pu2 dans le référentiel de la monture de présentation 33. On entend par homologue que les deux référentiels présentent une correspondance d'origine, de directions et de normes lorsque la monture cible et la monture de présentation sont superposées.

A l'étape f, connaissant ainsi le référentiel optique de chaque lentille cible 11,12, l'opticien peut aisément reporter la hauteur pupillaire h et le demi-écart Eg,Ed sur chacune des lentilles cibles 11,12 afin d'en déduire la position d'un point remarquable Pr1. Le point remarquable Pr1 correspond au point d'ancrage 18B,20B de la lentille cible 11,12.

A l'étape g, connaissant alors le référentiel optique de chaque lentille cible 11,12 ainsi que la position du point remarquable cible Pr1, la position de centrage pour la mise en forme et le perçage de la lentille cible 11,12 peut être facilement déduite. La méthode selon l'invention assure ainsi que, une fois les lentilles cibles 11,12 montées sur la monture cible 13, le point de centrage Pc1 vienne en regard de la pupille 50 du porteur.

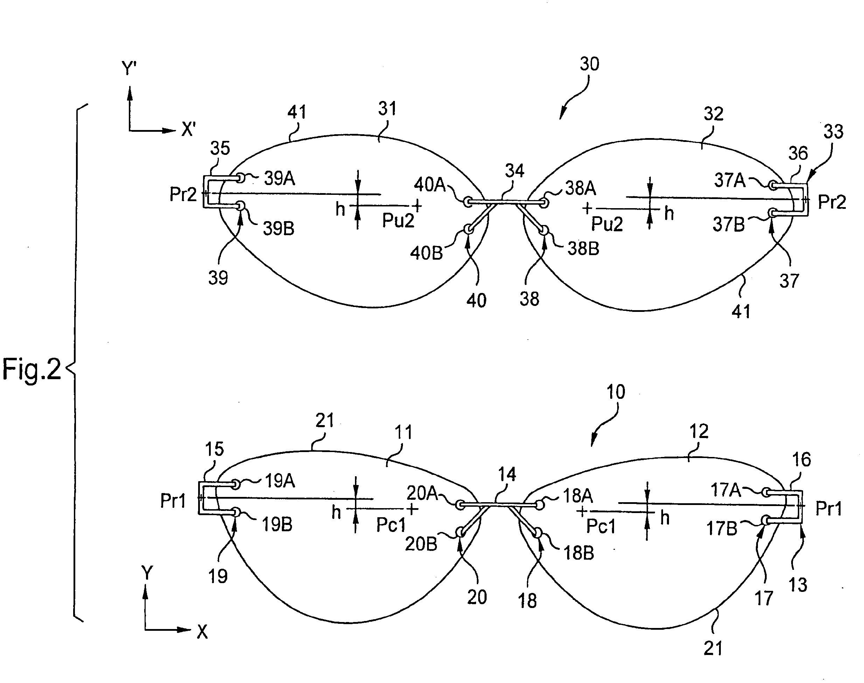

Selon une première variante de méthode de centrage représentée sur la figure 2, le point de référence Pr2 est placé différemment. Selon cette première variante de méthode de centrage, la monture de présentation 33 et la monture cible 13 sont encore identiques. C'est la raison pour laquelle il est possible de placer le point remarquable de présentation Pr2 sur un point quelconque du pontet 34 ou des branches 35,36, dans le plan X'Y'.

Ainsi, les étapes consistant, d'une part, à équiper le porteur des lunettes de présentation 30 et, d'autre part, à pointer le point pupillaire Pu2 sur les lentilles de présentation 31,32, restent identiques. La mesure de la hauteur h du point pupillaire se fait ici par rapport à la hauteur du nouveau point remarquable de présentation Pr2. A la suite de cette étape, les étapes consistant à mesurer les demi-écarts pupillaires Eg,Ed et à repérer le référentiel optique de la lentille cible 11,12, restent inchangées. En revanche, le report de la hauteur h sur les lentilles cibles est réalisé jusqu'à un nouveau point de référence Pr1. Les montures étant identiques, le point remarquable cible Pr1, dans le référentiel lié à la monture cible 13, est placé de manière à être homologue au point remarquable de présentation Pr2, dans le référentiel de la monture de présentation 33. On peut donc enfin en déduire la position de centrage des lentilles cibles 11,12.

La mise en oeuvre du procédé trouve une application particulièrement avantageuse par l'implémentation, dans un logiciel intégré à une machine pourvue d'une unité de traitement, d'un programme capable d'exécuter le plus grand nombre d'étapes de cette méthode de centrage. On peut ainsi envisager diverses autres variantes de méthodes de centrage plus automatisées dans lesquelles le contour 41 des lentilles de présentation 31,32 est connu.

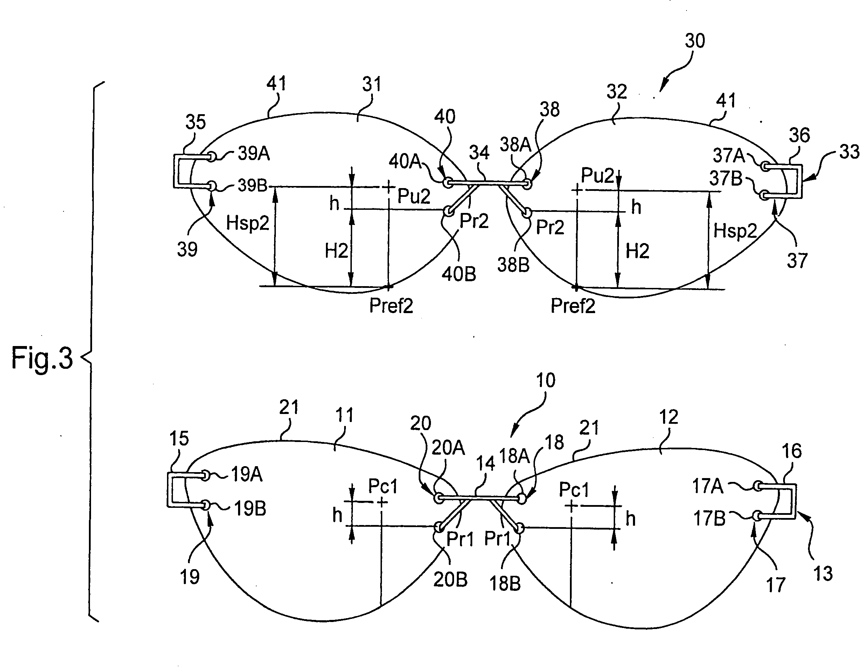

Selon une deuxième variante de méthode de centrage représentée sur la figure 3, l'étape de mesure de la hauteur pupillaire h du point pupillaire Pu2 est réalisée différemment.

Les étapes consistant, d'une part, à équiper le porteur des lunettes de présentation 30 et, d'autre part, à pointer le point pupillaire Pu2 sur les lentilles de présentation 31,32, restent identiques.

La mesure de la hauteur h du point pupillaire Pu2 se fait quant à elle en trois étapes. La première étape consiste à mesurer un écart de hauteur total Hsp2 (« datum ») entre le point pupillaire Pu2 et un point de référence Pref2. Le point de référence Pref2 correspond au point situé sur le contour 41 de la lentille de présentation 31,32, à la verticale du point pupillaire Pu2, sous ce même point pupillaire Pu2. Cette mesure est réalisée manuellement par l'opticien avec, par exemple, un réglet. L'écart de hauteur mesuré est, relativement à la hauteur totale des lentilles de présentation 31,32, important. L'erreur inhérente à la mesure de petites longueurs est ainsi diminuée.

La deuxième étape consiste à déterminer un écart de hauteur de référence H2 entre le point de référence Pref2 et le point remarquable de présentation Pr2. Le point remarquable de présentation Pr2 correspond ici encore au point d'ancrage 38B,40B de la lentille de présentation 31,32. Connaissant la forme et la position du contour 41 des lentilles de présentation 31,32 par rapport à la monture de présentation 33, ledit écart de hauteur H2 est lui aussi connu. L'opticien se procure en effet cet écart de hauteur H2 soit lorsque lui sont fournies les lunettes de présentation 30, soit à l'aide d'un appareil de lecture de contours tel que décrit dans le brevet EP0750172. Un exemple d'un tel appareil est celui commercialisé par Essilor International sous la marque Kappa ou encore celui commercialisé sous la marque Kappa CT.

La troisième étape consiste à déduire des résultats obtenus lors des deux premières étapes la hauteur h du point pupillaire Pu2 de la lentille de présentation 31,32. Ladite hauteur h correspond en effet à la différence entre ledit écart de hauteur total Hsp2 et ledit écart de hauteur de référence H2. On obtient alors une valeur de la hauteur h présentant une erreur de mesure faible.

A la suite de cette étape de détermination de la hauteur h, les étapes consistant à mesurer les demi-écarts pupillaires Eg,Ed, à repérer les référentiels optiques des lentilles cibles 11,12, à reporter ladite hauteur h et les demi-écarts pupillaires Eg,Ed sur les lentilles cibles 11,12 et à en déduire leurs positions de centrage restent inchangées.

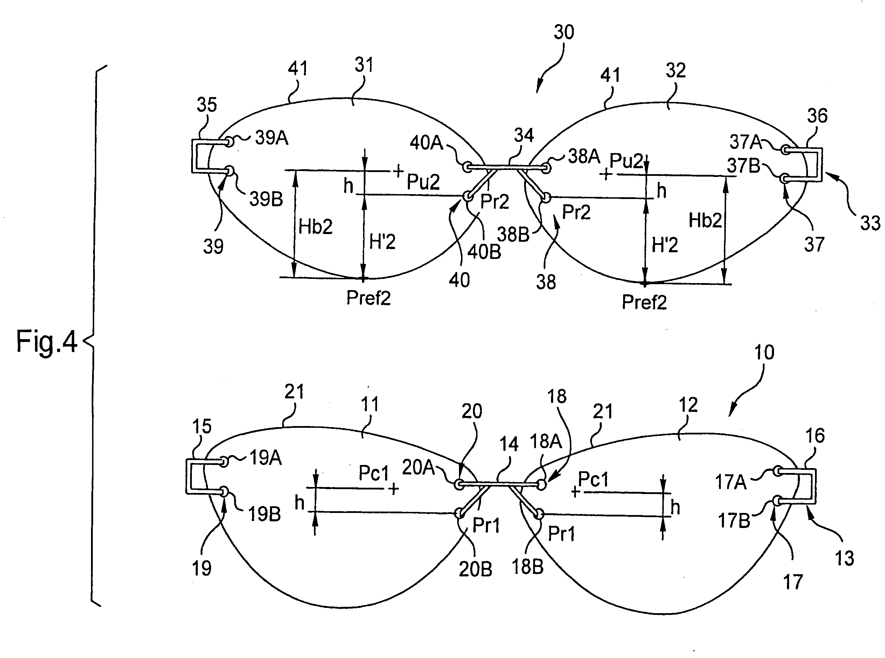

Selon une troisième variante de méthode de centrage représentée sur la figure 4, l'étape de mesure de la hauteur pupillaire h du point pupillaire Pu2 est réalisée d'une manière encore différente. Ici également, les étapes consistant, d'une part, à équiper le porteur des lunettes de présentation 30 et, d'autre part, à pointer le point pupillaire Pu2 sur les lentilles de présentation 31,32 restent identiques.

La mesure de la hauteur h du point pupillaire Pu2 se fait quant à elle toujours en trois étapes. Elle diffère de la variante de méthode précédente dans le choix du point de référence Pref2. La première étape consiste à mesurer un écart de hauteur total Hb2 (« boxing ») entre le point pupillaire Pu2 et un nouveau point de référence Pref2. Le nouveau point de référence Pref2 correspond au point situé le plus bas sur le contour 41 de la lentille de présentation 31,32. La deuxième étape consistant à déterminer un écart de hauteur de référence H'2 entre le nouveau point de référence Pref2 et le point remarquable de présentation Pr2 est réalisée par calcul. En effet, la forme et la position du contour 41 des lentilles de présentation par rapport aux montures de présentation 33 sont ici aussi connues. La troisième étape consiste à en déduire la hauteur h du point pupillaire Pu2 de la lentille de présentation 31,32 selon une technique identique à celle utilisée dans la variante de méthode précédente.

A la suite de cette étape de mesure de la hauteur h, les étapes consistant à mesurer les demi-écarts pupillaires Eg,Ed, à repérer le référentiel optique de la lentille cible 11,12, à reporter ladite hauteur h et les demi-écarts pupillaires Eg,Ed sur les lentilles cibles 11,12 et à en déduire leurs positions de centrage restent ici également inchangées.

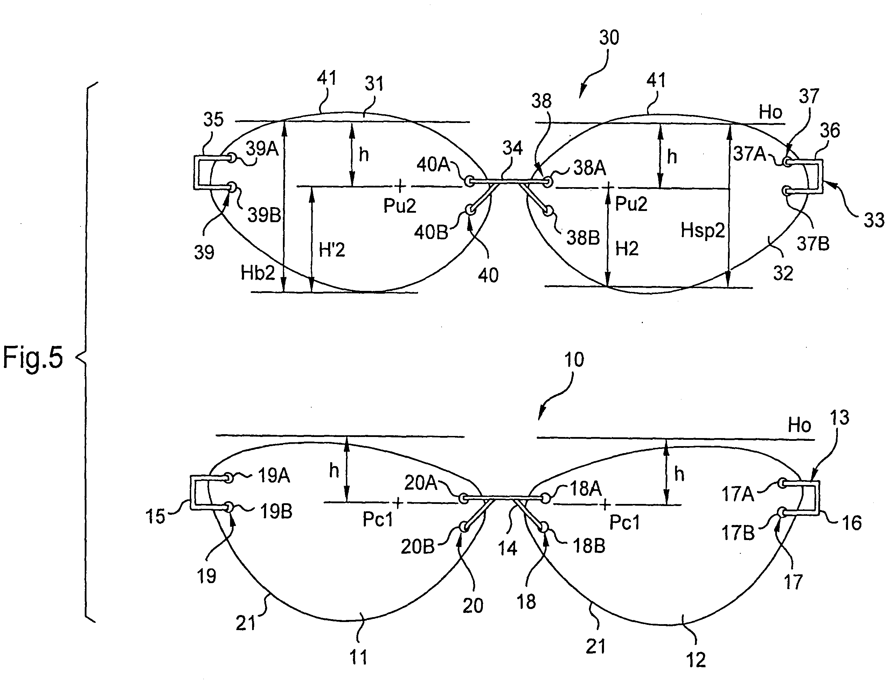

Selon une quatrième variante de méthode de centrage représentée sur la figure 5, les mesures ne sont plus réalisées par rapport à un point de référence mais par rapport à une hauteur de référence H0 dans le référentiel de la monture de présentation.

Ici encore, les étapes consistant, d'une part, à équiper le porteur des lunettes de présentation 30 et, d'autre part, à pointer le point pupillaire Pu2 sur les lentilles de présentation 31,32 restent identiques.

La mesure de la hauteur h du point pupillaire Pu2 se fait quant à elle toujours en trois étapes selon l'une des méthodes décrites dans les deuxième et troisième variantes de réalisation. La méthode diffère dans la mesure où il n'est plus fait référence à un point remarquable de présentation Pr2.

La première étape consiste toujours à mesurer un écart de hauteur H'2 ou H2, selon la technique choisie, entre le point pupillaire Pu2 et le point de référence Pref2. La seconde étape diffère des variantes de méthodes précédentes dans la mesure où l'écart de hauteur Hb2 ou Hsp2 correspond à l'écart de hauteur entre le point de référence Pref2 choisi et une hauteur H0. Cette hauteur H0 peut, si l'opticien le souhaite être dépendante physiquement de la monture de présentation 33, mais ce n'est pas forcément toujours le cas. En revanche, cette hauteur H0 a des coordonnées connues dans un référentiel lié à la monture de présentation 33. Ainsi, connaissant la forme et la position du contour des lentilles de présentation 31,32 par rapport à la monture de présentation, il est possible de déterminer la valeur de l'écart de hauteur Hb2 ou Hsp2. La troisième étape consistant à déterminer la hauteur h est réalisée selon la même méthode que précédemment.

A la suite de ces étapes, les étapes consistant à mesurer les demi-écarts pupillaires Eg,Ed, à repérer les référentiels optiques des lentilles cibles 11,12, à reporter ladite hauteur h et les demi-écarts pupillaires Eg,Ed sur les lentilles cibles 11,12 et à en déduire leurs positions de centrage restent inchangées. En effet, le centrage des lentilles cibles 11,12 est réalisé de sorte que les demi-écarts pupillaires Ed,Eg mesurés sur les lentilles de présentation 31,32 soient correctement reportés sur les lentilles cibles 11,12 et de sorte que la hauteur H0, positionnée par rapport à la monture de présentation 33, présente un écart de hauteur h avec le point de centrage Pc1 des lentilles cibles 11,12.

## Revendications

1. Méthode de centrage d'une lentille ophtalmique cible (11, 12) de lunettes cibles (10) sur une monture cible (13) de type sans cercles présentant un contour final (21) de géométrie connue, avec un pontet (14) et des branches (15, 16) fixés à la lentille cible en des points d'ancrages (17, 18, 19, 20) définis par rapport au contour final (21), comportant les étapes de :
a) équiper le porteur avec des lunettes de présentation (30) comportant une monture de présentation (33) identique à ladite monture cible (13) et au moins une lentille de présentation (31, 32) associée au même oeil que ladite lentille cible,
b) pointer manuellement ou identifier automatiquement sur la lentille de présentation (31, 32) le point pupillaire (Pu2) en regard duquel se situe la pupille (50) de l'oeil (51) correspondant du porteur,
c) mesurer la hauteur pupillaire du point pupillaire (Pu2) de la lentille de présentation (31, 32),
d) mesurer l'écart ou le demi-écart (Eg,Ed) pupillaire du porteur,
e) repérer le référentiel optique de la lentille cible (11, 12) et en particulier le point de centrage (Pc1) de la lentille cible (11, 12) qui est destiné à venir en regard de la pupille (50) du porteur lorsque le porteur porte ses lunettes cibles (10),
f) reporter la hauteur pupillaire et l'écart ou le demi-écart pupillaire sur la lentille cible (11, 12), à partir dudit point de centrage (Pc1) de la lentille cible (11, 12), et
g) en déduire la position de centrage de la lentille cible (11, 12) par rapport à la monture cible (13), ou inversement,
**caractérisée en ce que**, la lentille de présentation (31, 32) présentant un contour (41) de forme et/ou de position par rapport à la monture de présentation différentes de la forme et/ou de la position prévues pour le contour final (21) de la lentille cible (11, 12) après détourage et montage sur la monture cible,
- on mesure directement ou indirectement, à l'étape c, la hauteur (h) du point pupillaire (Pu2) de la lentille de présentation (31, 32) dans un référentiel lié à la monture de présentation (33) et indépendant de la forme du contour (41) de la lentille de présentation (31, 32) et
- on déduit, à l'étape g, la position de centrage de la lentille cible (11, 12) par rapport à la monture cible (13), ou inversement, pour que le point de centrage (Pc1) soit, dans un référentiel lié à la monture cible (13) homologue du référentiel de la monture de présentation (33), situé à la même hauteur (h) que le point pupillaire (Pu2) dans le référentiel de la monture de présentation (33).

2. Méthode selon la revendication précédente, dans laquelle :
- on mesure directement ou indirectement, à l'étape c, l'écart de hauteur (h) entre le point pupillaire (Pu2) de la lentille de présentation (31, 32) et un point remarquable de présentation (Pr2) lié à la monture de présentation (33) et matériellement identifiable sur cette monture,
- on déduit, à l'étape g, la position de centrage de la lentille cible (11, 12) par rapport à la monture cible (13), ou inversement, pour qu'un point remarquable cible (Pr1) lié à la monture cible (13), homologue du point remarquable de présentation (Pr2) de la monture de présentation, présente le même écart de hauteur (h) par rapport au point de centrage (Pc1) que l'écart de hauteur du point remarquable de présentation (Pr2) par rapport au point pupillaire (Pu2).

3. Méthode selon la revendication précédente, dans laquelle le point remarquable de présentation (Pr2) de la monture de présentation (33) est un point d'ancrage de cette monture sur la lentille de présentation (31, 32).

4. Méthode selon la revendication précédente, dans laquelle le point remarquable de présentation (Pr2) est un point d'ancrage du pontet (34) de la monture de présentation (33) sur la lentille de présentation concernée (31, 32).

5. Méthode selon la revendication 3, dans laquelle le point remarquable de présentation (Pr2) est un point d'ancrage des branches (35, 36) de la monture de présentation (33) sur la lentille de présentation concernée (31, 32).

6. Méthode selon l'une des revendications 2 à 5, dans laquelle, à l'étape c, on mesure directement l'écart de hauteur (h) entre le point pupillaire (Pu2) de la lentille de présentation (31, 32) et le point remarquable de présentation (Pr2) de la monture de présentation (33).

7. Méthode selon l'une des revendications 1 à 5, dans laquelle :
- on acquiert numériquement la forme du contour de la lentille de présentation (31, 32) ainsi que la position de ce contour par rapport à la monture de présentation, par lecture de contour et/ou palpage et/ou reconnaissance d'images ou à partir d'un fichier électronique représentatif de sa forme et de sa position par rapport à la monture de présentation,
- on mesure, à l'étape c, l'écart de hauteur (Hb2 ; Hsp2) entre le point pupillaire (Pu2) de la lentille de présentation (31, 32) et un point de référence de présentation (Pref2) du contour (41) de la lentille de présentation (31, 32),
- on en déduit par calcul, compte tenu de la forme connue du contour (41) de la lentille de présentation (31, 32) et du positionnement connu de ce contour (41) par rapport à la monture de présentation (33), la hauteur (H2 ;H'2) de ce point de référence de présentation (Pref2) dans le référentiel lié à la monture de présentation (33) et
- on en déduit la hauteur (h) du point pupillaire (Pu2) de la lentille de présentation (31, 32) dans le référentiel de la monture de présentation (33).

8. Méthode selon la revendication précédente, prise en dépendance de la revendication 2, dans laquelle, à l'étape c, on calcule, compte tenu de la forme connue du contour de la lentille de présentation (31, 32), l'écart de hauteur entre le point de référence de présentation (Pref2) et ledit point remarquable de présentation (Pr2) et on en déduit l'écart de hauteur (h) entre le point pupillaire (Pu2) de la lentille de présentation (31, 32) et ledit point remarquable de présentation (Pr2).

9. Méthode selon l'une des revendications 7 et 8, dans laquelle le point de référence de présentation (Pref2) lié à la lentille de présentation (31, 32) est le point le plus bas du contour (41) de la lentille de présentation (31, 32).

10. Méthode selon l'une des revendications 7 et 8, dans laquelle le point de référence de présentation (Pref2) lié à la lentille de présentation (31, 32) est le point du contour de la lentille de présentation (31, 32) situé à la verticale du point pupillaire (Pu2), sous le point pupillaire (Pu2).

11. Méthode selon l'une des revendications précédentes, dans laquelle le contour final (21) de la lentille cible (11,12) est choisi dans une base de données correspondant à la monture cible choisie (13).

12. Méthode selon l'une des revendications 1 à 10, dans laquelle le contour final (21) de la lentille cible (11,12) est choisi par déformation de contour du contour (41) des lentilles de présentation (31,32).

## Claims

1. A method of centering a target ophthalmic lens (11, 12) of target eyeglasses (10) on a target frame (13) of the rimless type presenting a final outline (21) of known shape, with a bridge (14) and arms (15, 16) fastened to the target lens at anchor points (17, 18, 19, 20) defined relative to the final outline (21), the method comprising the steps of:
a) fitting the wearer with presentation eyeglasses (30) comprising a presentation frame (33) identical to said target frame (13) and at least one presentation lens (31, 32) associated with the same eye as said target lens;
b) pointing out manually, or identifying automatically, on the presentation lens (31, 32) the pupillary point (Pu2) with which the pupil (50) of the corresponding eye (51) of the wearer is in register;
c) measuring the pupillary height of the pupillary point (Pu2) of the presentation lens (31, 32);
d) measuring the pupillary distance or half-distance (Eg, Ed) of the wearer;
e) identifying the optical frame of reference of the target lens (11, 12) and in particular the centering point (Pc1) of the target lens (11, 12) that is to come into register with the pupil (50) of the wearer when the wearer is wearing the target eyeglasses (10);
f) transferring the pupillary height and the pupillary distance or half-distance onto the target lens (11, 12) from said centering point (Pc1) of the target lens (11, 12); and
g) deducing therefrom the centering position of the target lens (11, 12) relative to the target frame (13), or vice versa;
**characterized in that**, for the presentation lens (31, 32) presenting an outline (41) of shape and/or position relative to the presentation frame differing from the shape and/or position intended for the final outline (21) of the target lens (11, 12) after edging and mounting on the target frame, the following steps are performed:
• directly or indirectly measuring in step c), the height (h) of the pupillary point (Pu2) of the presentation lens (31, 32) in a frame of reference based on the presentation frame (33) and independent of the shape of the outline (41) of the presentation lens (31, 32); and
• deducing, in step g), the centering position of the target lens (11, 12) relative to the target frame (13), or vice versa, so that the centering point (Pc1), in a frame of reference based on the target frame (13) corresponding to the frame of reference of the presentation frame (33), is situated at the same height (h) as the pupillary point (Pu2) in the frame of reference of the presentation frame (33).

2. A method according to the preceding claim, comprising the steps of:
• directly or indirectly measuring, in step c), the height difference (h) between the pupillary point (Pu2) of the presentation lens (31, 32) and a presentation remarkable point (Pr2) associated with the presentation frame (33) and physically identifiable on said frame; and
• deducing, in step g), the centering position of the target lens (11, 12) relative to the target frame (13), or vice versa, so that a target remarkable point (Pr1) associated with the target frame (13), corresponding to the presentation remarkable point (Pr2) of the presentation frame, presents the same height difference (h) relative to the centering point (Pc1) as the height difference of the presentation remarkable point (Pr2) relative to the pupillary point (Pu2).

3. A method according to the preceding claim, in which the presentation remarkable point (Pr2) of the presentation frame (33) is an anchor point of said frame on the presentation lens (31, 32).

4. A method according to the preceding claim, in which the presentation remarkable point (Pr2) is an anchor point of the bridge (34) of the presentation frame (33) on the presentation lens (31, 32) concerned.

5. A method according to claim 3, in which the presentation remarkable point (Pr2) is an anchor point for an arm (35, 36) of the presentation frame (33) on the presentation lens (31, 32) concerned.

6. A method according to any one of claims 2 to 5, in which, in step c), the height difference (h) between the pupillary point (Pu2) of the presentation lens (31, 32) and the presentation remarkable point (Pr2) of the presentation lens (33) is measured directly.

7. A method according to any one of claims 1 to 5, including the following steps:
• numerically acquiring the shape of the outline of the presentation lens (31, 32) and the position of said outline relative to the presentation frame, by outline reading and/or feeling and/or image recognition, or on the basis of an electronic file representative of its shape and position relative to the presentation frame;
• measuring, in step c), the height difference (Hb2; Hsp2) between the pupillary point (Pu2) of the presentation lens (31, 32) and a presentation reference point (Pref2) of the outline (41) of the presentation lens (31, 32);
• performing calculation, taking account of the known shape of the outline (41) of the presentation lens (31, 32) and of the known position of said outline (41) relative to the presentation frame (33), to deduce the height (H2; H'2) of said presentation reference point (Pref2) in the frame of reference associated with the presentation frame (33); and
• deducing therefrom the height (h) of the pupillary point (Pu2) of the presentation lens (31, 32) in the frame of reference of the presentation frame (33).

8. A method according to the preceding claim, taken as dependent on claim 2, including, in step c), performing calculation, taking account of the known shape of the outline of the presentation lens (31, 32) to determine the height difference between the presentation reference point (Pref2) and said presentation remarkable point (Pr2), and deducing therefrom the height difference (h) between the pupillary point (Pu2) of the presentation lens (31, 32) and said presentation remarkable point (Pr2).

9. A method according to claim 7 or claim 8, in which the presentation reference point (Pref2) associated with the presentation lens (31, 32) is the lowest point of the outline (41) of the presentation lens (31, 32).

10. A method according to claim 7 or claim 8, in which the presentation reference point (Pref2) associated with the presentation lens (31, 32) is the point of the outline of the presentation lens (31, 32) that is situated vertically below the pupillary point (Pu2).

11. A method according to any preceding claim, in which the final outline (21) of the target lens (11, 21) is selected from a database corresponding to the selected target frame (13).

12. A method according to any one of claims 1 to 10, in which the final outline (21) of the target lens (11, 12) is selected by deforming the outline (41) of the presentation lenses (31, 32).

## Patentansprüche

1. Methode zum Zentrieren eines Ziel-Brillenglases (11, 12) einer Ziel-Brille (10) in einer randlosen Ziel-Brillenfassung (13) mit einer endgültigen Kontur (21) bekannter Geometrie, mit einem Nasensteg (14) und Bügeln (15, 16), die über Verankerungspunkte (17, 18, 19, 20), welche in Bezug zur endgültigen Kontur (21) definiert sind, am Ziel-Brillenglas fixiert sind, wobei die Methode folgende Schritte umfasst:
a) den Brillenträger mit einer Demonstrations-Brille (30) mit einer mit der Ziel-Brillenfassung (13) identischen Demonstrations-Brillenfassung (33) und mit mindestens einem Demonstrations-Brillenglas (31, 32), das dem gleichen Auge zugeordnet ist wie das Ziel-Brillenglas, ausstatten,
b) auf dem Demonstrations-Brillenglas (31, 32) den Pupillenpunkt (Pu2), an dem sich die Pupille (50) des Auges (51) entsprechend dem Brillenträger befindet, manuell markieren oder automatisch identifizieren,
c) die Pupillenhöhe des Pupillenpunktes (Pu2) des Demonstrations-Brillenglases (31, 32) messen,
d) den Pupillenabstand bzw. den halben Pupillenabstand (Eg, Ed) des Brillenträgers messen,
e) das optische Bezugssystem des Ziel-Brillenglases (11,12) und insbesondere den Zentrierpunkt (Pc1) des Ziel-Brillenglases (11, 12), der sich genau vor der Pupille (50) des Brillenträgers befinden muss, wenn der Brillenträger seine Ziel-Brille (10) trägt, kennzeichnen,
f) ausgehend von diesem Zentrierpunkt (Pc1) des Ziel-Brillenglases (11, 12) die Pupillenhöhe und den Pupillenabstand bzw. den halben Pupillenabstand auf das Ziel-Brillenglas (11, 12) übertragen, und
g) davon die Zentrierposition des Ziel-Brillenglases (11, 12) in Bezug zur Ziel-Brillenfassung (13)
ableiten, oder umgekehrt,
**dadurch gekennzeichnet, dass** man bei einem Demonstrations-Brillenglas (31, 32) mit einer unterschiedlichen Formkontur (41) und/oder Position in Bezug zur Demonstrations-Brillenfassung als die für die endgültige Kontur (21) des Ziel-Brillenglases (11, 12) nach dem Zuschneiden und Montieren in die Ziel-Brillenfassung vorgesehenen,
- im Schritt c die Höhe (h) des Pupillenpunktes (Pu2) des Demonstrations-Brillenglases (31, 32) in einem Bezugssystem, das mit der Demonstrations-Brillenfassung (33) in Verbindung steht und von der Form der Kontur (41) des Demonstrations-Brillenglases (31, 32) unabhängig ist, direkt oder indirekt misst, und man
- im Schritt g die Zentrierposition des Ziel-Brillenglases (11, 12) in Bezug zur Ziel-Brillenfassung (13) oder umgekehrt ableitet, damit der Zentrierpunkt (Pc1) in einem Bezugssystem, das mit der Ziel-Brillenfassung (13) in Verbindung steht, dem Bezugssystem der Demonstrations-Brillenfassung (33) entspricht und auf der gleichen Höhe (h) als der Pupillenpunkt (Pu2) in dem Bezugssystem der Demonstrations-Brillenfassung (33) ist.

2. Methode nach dem vorausgehenden Anspruch, bei der:
- man im Schritt c den Höhenabstand (h) zwischen dem Pupillenpunkt (Pu2) des Demonstrations-Brillenglases (31, 32) und einem Demonstrations-Kennpunkt (Pr2), der mit der Demonstrations-Brillenfassung (33) in Verbindung steht und auf dieser Brillenfassung faktisch identifizierbar ist, direkt oder indirekt misst, und man
- im Schritt g die Zentrierposition des Ziel-Brillenglases (11, 12) in Bezug zur Ziel-Brillenfassung (13) oder umgekehrt ableitet, damit ein Ziel-Kennpunkt (Pr1), der mit der Ziel-Brillenfassung (13) in Verbindung steht, dem Demonstrations-Kennpunkt (Pr2) der Demonstrations-Brillenfassung (33) entspricht, den gleichen Höhenabstand (h) in Bezug zum Zentrierpunkt (Pc1) wie der Höhenabstand des Demonstrations-Kennpunktes (Pr2) in Bezug zum Pupillenpunkt (Pu2) aufweist.

3. Methode nach dem vorausgehenden Anspruch, bei der der Demonstrations-Kennpunkt (Pr2) der Demonstrations-Brillenfassung (33) ein Verankerungspunkt dieser Fassung im Demonstrations-Brillenglas (31, 32) ist.

4. Methode nach dem vorausgehenden Anspruch, bei der der Demonstrations-Kennpunkt (Pr2) ein Verankerungspunkt des Nasenstegs (34) der Demonstrations-Brillenfassung (33) im betreffenden Demonstrations-Brillenglas (31, 32) ist.

5. Methode nach Anspruch 3, bei der der Demonstrations-Kennpunkt (Pr2) ein Verankerungspunkt der Bügel (35, 36) der Demonstrations-Brillenfassung (33) im betreffenden Demonstrations-Brillenglas (31, 32) ist.

6. Methode nach einem der Ansprüche 2 bis 5, bei der man im Schritt c den Höhenabstand (h) zwischen dem Pupillenpunkt (Pu2) des Demonstrations-Brillenglases (31, 32) und dem Demonstrations-Kennpunkt (Pr2) der Demonstrations-Brillenfassung (33) direkt misst.

7. Methode nach einem der Ansprüche 1 bis 5, bei der:
- man die Form der Kontur des Demonstrations-Brillenglases (31, 32) sowie die Position dieser Kontur in Bezug zur Demonstrations-Brillenfassung durch Ablesen der Kontur und/oder Abtasten und/oder Bilderkennung oder ausgehend von einer elektronischen Datei, die für ihre Form und Position in Bezug zur Demonstrations-Brillenfassung repräsentativ ist, digital erfasst,
- man im Schritt c den Höhenabstand (Hb2, Hsp2) zwischen dem Pupillenpunkt (Pu2) des Demonstrations-Brillenglases (31, 32) und einem Referenzpunkt (Pref2) der Kontur (41) des Demonstrations-Brillenglases (31, 32) misst,
- man davon durch Berechnung und unter Berücksichtigung der bekannten Form der Kontur (41) des Demonstrations-Brillenglases (31, 32) und der bekannten Positionierung dieser Kontur (41) in Bezug zur Demonstrations-Brillenfassung (33) die Höhe (H2; H'2) dieses Referenzpunktes (Pref2) im Bezugssystem ableitet, das mit der Demonstrations-Brillenfassung (33) in Verbindung steht und
- man davon die Höhe (h) des Pupillenpunktes (Pu2) des Demonstrations-Brillenglases (31, 32) im Bezugssystem der Demonstrations-Brillenfassung (33) ableitet.

8. Methode nach vorausgehendem Anspruch und in Abhängigkeit von Anspruch 2, bei der man im Schritt c unter Berücksichtigung der bekannten Form der Kontur des Demonstrations-Brillenglases (31, 32) den Höhenabstand zwischen dem Referenzpunkt (Pref2) und dem Demonstrations-Kennpunkt (Pr2) berechnet und man davon den Höhenabstand (h) zwischen dem Pupillenpunkt (Pu2) des Demonstrations-Brillenglases (31, 32) und dem Demonstrations-Kennpunkt (Pr2) ableitet.

9. Methode nach einem der Ansprüche 7 und 8, bei der der Referenzpunkt (Pref2), der mit dem Demonstrations-Brillenglas (31, 32) in Verbindung steht, der unterste Punkt der Kontur (41) des Demonstrations-Brillenglases (31, 32) ist.

10. Methode nach einem der Ansprüche 7 und 8, bei der der Referenzpunkt (Pref2), der mit dem Demonstrations-Brillenglas (31, 32) in Verbindung steht, der Punkt der Kontur des Demonstrations-Brillenglases (31, 32) ist, der sich senkrecht unter dem Pupillenpunkt (Pu2) befindet.

11. Methode nach einem der vorausgehenden Ansprüche, bei der die endgültige Kontur (21) des Ziel-Brillenglases (11, 12) in einer der ausgewählten Ziel-Brillenfassung (13) entsprechenden Datenbank ausgewählt wird.

12. Methode nach einem der Ansprüche 1 bis 10, bei der die endgültige Kontur (21) des Ziel-Brillenglases (11, 12) durch Konturverformung der Kontur (41) der Demonstrations-Brillengläser (31, 32) ausgewählt wird.
